# EUROPÄISCHE PATENTSCHRIFT

(11) **EP 2 945 890 B1**
(45) Veröffentlichungstag und Bekanntmachung des Hinweises auf die Patenterteilung: **21.06.2017**
(21) Anmeldenummer: 13701365.2
(22) Anmeldetag: 18.01.2013
(51) Int. Cl.: B65G 25/02, B21C 47/24

(54) **SYSTEM MIT EINEM BUND UND EINER FÖRDERVORRICHTUNG FÜR DEN BUND**
SYSTEM WITH A COIL AND A CONVEYING SYSTEM FOR THE COIL
SYSTÈME AVEC UNE BOBINE ET UN CONVOYEUR POUR LA BOBINE

(43) Veröffentlichungstag der Anmeldung: 25.11.2015
(73) Patentinhaber: AMOVA GmbH, 57250 Netphen (DE)
(72) Erfinder: HOFMANN, Karl, Robert, 57250 Netphen (DE)
(74) Vertreter: Grosse, Wolf-Dietrich Rüdiger
(86) Internationale Anmeldenummer: PCT/EP2013/000153
(87) Internationale Veröffentlichungsnummer: WO 2014/111100

(56) Entgegenhaltungen:
- US-A- 4 934 511
- US-B1- 6 364 093

## Beschreibung

### 1. Gebiet der Erfindung

Die Erfindung betrifft ein System mit einem Bund und einer Vorrichtung in fördertechnischen Einrichtungen zum Umsetzen von zu Bunden gewickelten Metallbändern, insbesondere hergestellt aus hochfesten oder ultrahochfesten Stahlsorten, wobei der Bund zum Transport von einer ruhenden Position auf einer Bundablage mittels einer höhenverstellbaren Bundhubvorrichtung angehoben und abgesenkt werden kann, wobei die Bundablage zwei zueinander seitlich beabstandet angeordnete Bundablage-Elemente und die Bundhubvorrichtung zwei Auflagerzinken aufweist.

### 2. Stand der Technik

In einem modernen Walzwerk werden unterschiedliche Stahlgüten verarbeitet, die grob in drei Grundgruppen eingeteilt werden können. Diese sind wie folgt:
1. Normale, zumeist heiß gewickelte Baustähle, die beim Aufwickeln plastisch verformt werden. Ein freier Bandschlappen, d. h. das freiliegende Bandende, liegt von außen praktisch am Coil an, so dass dieses Bandende dann, wenn es beispielsweise in eine Schere eingeführt werden soll, vom Coil abgeschält werden muss.
2. Hochfeste Feinkornbaustähle, die thermomechanisch gewalzt im mittleren Temperaturbereich aufgewickelt werden. Durch die hohe Festigkeit des Stahls sind die Bleche nur teilplastisch verformt. Ein freier Bandschlappen stellt sich mit einem größeren Durchmesser etwas vom Coil ab, so dass ein Abschälen nicht erforderlich wird.
3. Ultrahochfeste Stähle, die im Walzprozess vergütet werden und extrem hohe Festigkeiten besitzen. Diese Werkstoffe mit zugehörigen Banddicken von maximal nur ca. 15 mm werden beim Aufwickeln nicht mehr plastisch verformt, sondern ausschließlich elastisch gedehnt. Ein freier Bandschlappen nimmt daher ohne auf ihn einwirkende Kräfte wieder die vollgestreckte, gerade Form aus der Walzstraße an.

Bei Stahlbunden der hochfesten und ultrahochfesten Typen, welche nicht abgebunden sind, kann das Bandende das Coil aus den Ablagen herausheben, da die von dem freien Bandschlappen ausgeübte Kraft ggf. ausreicht, den Bund zumindest von einem Bundablage-Element abzuheben.

Die bekannten Bundsättel bzw. Bundablagen können einem Aufspringen entgegenwirken, dies allerdings nur bei im Durchmesser hinreichend großen Bunden, weil diese über einen entsprechend größeren Teilumfang bis zu einem seitlich äußeren Bereich in entsprechend großer Stützbasis auf dem Bundsattel aufliegen können, so dass dem Aufspringen aufgrund der geometrisch bedingten längeren Hebelarme des Bundeigengewichts von der Mitte des aufliegenden Bundes bis zu dem seitlichen Stützbereich entgegengewirkt wird. Dieser Effekt lässt sich hingegen bei im Durchmesser kleineren Bunden, die nur mit einem geringen Teilumfang und eher konzentriert im zentralen Bereich des Bundsattels aufliegen, wegen der damit kleineren Stützbasis nicht ausnutzen.

In der WO 2013/079081 A1 ist diesbezüglich bereits vorgeschlagen worden, die Form der Bundablagen so zu verändern, dass Bunde mit unterschiedlichen Durchmessern auflegbar sind, wobei ohne weitere Maßnahmen für jeden möglichen Bunddurchmesser einem Aufspringen der Wickellagen entgegengewirkt werden soll. In der Praxis hat sich jedoch gezeigt, dass die hier beschriebenen Bundablagen bei Bunden aus ultrahochfesten Stahlsorten und mit geringem Bunddurchmesser die gewünschten Effekte noch nicht vollständig erzielen. Weitere gattungsgemässen Vorrichtungen sind aus der US 4,934,511 A1 und aus der US 6, 364,093 B1 bekannt.

### 3. Aufgabe der Erfindung

Es war daher eine Aufgabe der Erfindung, ein System mit einem Bund und einer Vorrichtung in fördertechnischen Einrichtungen zum Umsetzen von zu Bunden gewickelten Metallbändern zur Verfügung zu stellen, die die aus dem Stand der Technik bekannten Nachteile zu überwinden in der Lage und insbesondere geeignet ist, auch Bunde aus ultrahochfesten Stahlsorten mit geringem Bunddurchmesser sicher in einer ruhenden Position auf der Bundablage zu halten.

Diese Aufgabe wird im erfindungsgemäßen Sinne mit einem System, umfassend die Merkmale des Anspruchs 1, gelöst. Vorteilhafte Ausgestaltungen der Erfindung sind in den abhängigen Ansprüchen dargelegt.

### 4. Zusammenfassung der Erfindung

Erfindungsgemäß sind zumindest die Bundablage-Elemente asymmetrisch zur Lotrechten durch das Rotationszentrum des Bundes angeordnet, wodurch eine Auflage des Bundes auf der Bundablage gewährleistet ist, bei der die Bundablage-Elemente einen unterschiedlichen Abstand zum Zentrum des auf ihnen aufliegenden Bundes aufweisen. Hierdurch folgt zudem, dass durch die Verschiebung des Bundschwerpunktes auf ein Bundablage-Element hin eines der Bundablage-Elemente eine größere Lagerbelastung erfährt als bei einer symmetrischen Lagerung, so dass diese größere Lagerkraft das Bandende stärker gegen das Coil andrücken kann. Im Ergebnis kann bei gleichem Coildurchmesser ein dickeres Band oder ein höherfester Werkstoff bzw. beides in Kombination gelagert bzw. auch transportiert werden, als dies bei vergleichbaren, symmetrisch ausgestalteten Bundablagen, der Fall ist.

In einer bevorzugten Ausführungsform der erfindungsgemäßen Vorrichtung sind sowohl die Bundablage-Elemente als auch die Auflagerzinken asymmetrisch zur Lotrechten durch das Rotationszentrum des Bundes angeordnet. Somit wird sichergestellt, dass die oben beschriebenen Effekte auch dann, wenn der Bund von der Bundhubvorrichtung angehoben wird und ausschließlich auf den Auflagerzinken des Bundhubwagens aufliegt, erreicht wird. Die erfindungsgemäße Vorrichtung kann somit auch beim Umsetzen der Bunde ultrahochfeste Stahlsorten mit geringem Bunddurchmesser sicher und abhebefrei tragen, da das freie Bandende sowohl in der ruhenden Position als auch in einer angehobenen Position mit größerer Kraft als bei herkömmlichen Bundhubwagen gegen das Coil gedrückt wird. Zudem wird hierdurch gewährleistet, dass beim Umsetzen des Bundes die Verschiebung der Lotrechten des Bundes auf ein Minimum beschränkt oder ganz vermieden wird. Erfindungsgemäss weisen die Auflagerpunkte für den Bund an den Bundablage-Elementen, vorzugsweise auch die Auflagerpunkte an den Auflagerzinken, einen vertikalen Abstand zueinander auf, um dem Prinzip der Asymmetrie zu genügen.

Es wird ebenso bevorzugt, wenn die Auflagerzinken zueinander abgeschrägt verlaufende Kopfflächen aufweisen, um hierdurch Bunde unterschiedlichen Durchmessers nicht mehr nur mit einer vergleichsweise kleinen Stützbasis, mittig satt oder von der Mitte ausgehend nach beiden Seiten hin flächig, auf dem Bundsattel aufliegen zu lassen, sondern auf den für jeden Bunddurchmesser gleichweit voneinander entfernten Auflagerzinken. Diese stützen dann sowohl im Durchmesser kleinere als auch im Durchmesser größere Bunde mit einer stets größtmöglichen Stützbasis, d. h. ausgehend von der Mittenachse des Bundsattels zu beiden Seiten hin maximal außen liegend ab. Ein derartiger Bundsattel ist somit für nicht abgebundene Bunde bzw. Coils sehr vorteilhaft. Die Vertiefung zwischen den Auflagerzinken kann dabei lediglich so bemessen sein, dass sich ein den kleinsten Durchmesser aufweisender Bund zwischen die Auflagerzinken zwar absenken kann, jedoch nicht den Grund der Vertiefung zwischen den Auflagerzinken berührt.

Durch zueinander abgeschrägt verlaufende Kopfflächen wird eine Lagezentrierung des aufzunehmenden bzw. anzuhebenden und umzusetzenden Bundes auf die Bundhubvorrichtung erreicht. Bundhubwagenvorrichtungen können beispielsweise Bundhubwagen, Hubbalken oder ähnliche Vorrichtungen sein.

Es wird bevorzugt, wenn das dem freien Bandende abgewandte Bundablage-Element um einen vertikalen Abstand höher als das dem Bandende zugewandte Bundablge-Element in der Vorrichtung angeordnet ist. Ebenso wird bevorzugt, wenn die dem freien Bandende abgewandte Auflagerzinke der Bundhubvorrichtung um einen vertikalen Abstand höher als die dem Bandende zugewandte Auflagerzinke in der Vorrichtung angeordnet ist. Abgestellt hierbei wird jeweils auf das freie Bandende am Außenumfang des Bundes oder Coils sowie die Auflagepunkte für den Bund oder das Coil auf den Bundablage-Elementen bzw. den Auflagerzinken. Hierdurch wird gewährleistet, dass der Bund asymmetrisch zur Lotrechten durch das Rotationszentrum des Bundes innerhalb der Vorrichtung zu Liegen kommt und das eine Auflager eine größere Lagerbelastung erfährt als das andere Auflager.

Es wird in diesem Zusammenhang insbesondere bevorzugt, wenn der Quotient aus dem vertikalen Abstand der Bundablage-Elemente zueinander zur Summe der Abstände zwischen den Lotrechten durch die Auflagerpunkte für den Bund an den Bundablage-Elementen und der Lotrechten durch das Rotationszentrum des Bundes hindurch einen Wert zwischen 0,1 und 0,5 annimmt. Ebenso wird bevorzugt, wenn der Quotient aus dem vertikalen Abstand der Auflagerzinken zur Summe der Abstände zwischen den Lotrechten durch die Auflagerpunkte für den Bund an den Auflagerzinken und der Lotrechten durch das Rotationszentrum des Bundes hindurch einen Wert zwischen 0,1 und 0,5 annimmt. Hierdurch wird eine Vorrichtung geschaffen, die dem Zweck der Bundstabilisierung für eine besonders große Anzahl von unterschiedlichen Bunddurchmessern und für sämtliche, auch ultrahochfesten Stahlsorten, erfüllt.

### 5. Kurze Beschreibung der Figuren

In den Figuren 1 bis 5 wird die Erfindung exemplarisch näher erläutert, wobei in diesen Figuren bevorzugte Ausführungsformen der Erfindung dargestellt sind, die den Schutzbereich der Erfindung, wie er in den anhängenden Ansprüchen niedergelegt ist, nicht beschränken.
- Figur 1:: zeigt, eine Querschnittsansicht durch ein erfindungsgemässes System in einer ruhenden Position,
- Figur 2:: zeigt, eine Querschnittsansicht durch das erfindungsgemässe System aus Figur 1 in einer Umsetzposition,
- Figur 3:: zeigt, eine Querschnittsansicht durch einen Teil des erfindungsgemässen Systems in zwei verschiedenen Seitenansichten, und
- Figur 4:: zeigt eine Querschnittsansicht durch einen Teil eines anderen erfindungsgemässen Systems in zwei verschiedenen Seitenansichten, und
- Figur 5:: zeigt, die auf die Bundablage-Elemente und die Auflagerzinken einwirkenden Kräfte beim Ablegen und Fördern eines Bundes-
- 6.: Detaillierte Beschreibung der Zeichnungen

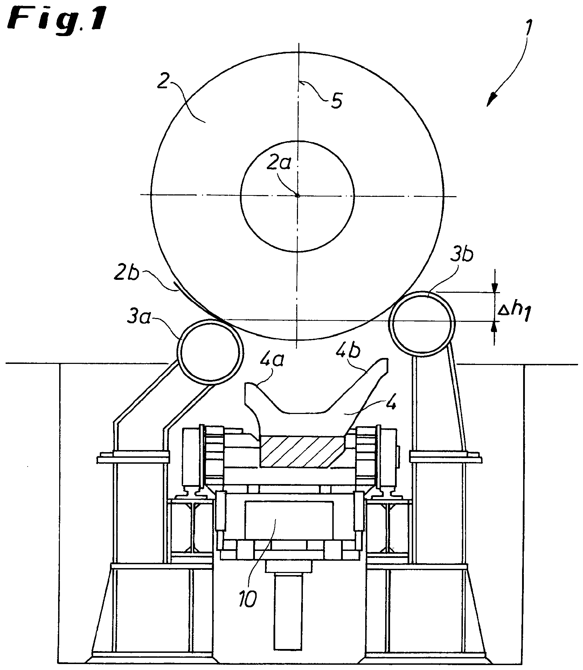

Figur 1 zeigt eine Ansicht auf ein erfindungsgemässes System mit einer Vorrichtung 1 zum Umsetzen von Bunden 2. In der hier dargestellten ruhenden Position liegt der Bund 2 auf zwei Bundablage-Elementen 3a, 3b auf, von denen das dem Bandende 2b abgewandte Bundablage-Element 3b um einen Betrag Δh₁ gegenüber dem dem Bandende 2b zugewandten Bundablage-Element 3a vertikal versetzt ist. Hierdurch ruht der Bund 2 so auf den Bundablage-Elementen 3a, 3b, dass die Bundablage-Elemente 3a, 3b asymmetrisch zu der durch das Rotationszentrum 2a des Bundes 2 hindurchtretenden Lotrechten 5 angeordnet sind. In der hier dargestellten ruhenden Position ist ein zwei Auflagerzinken 4a, 4b aufweisender Bundhubwagen 4, der mittels eines Hubzylinders 10 nach oben und unten verfahren werden kann, abgesenkt.

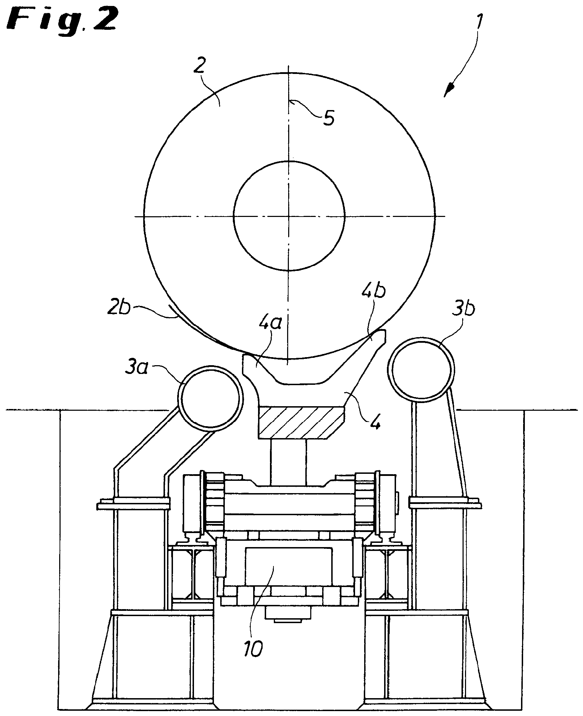

Figur 2 zeigt die Vorrichtung 1 in einer Umsetzposition, bei der der Bund 2 nicht mehr auf den Bundablage-Elementen 3a, 3b ruht, sondern nach Betätigung des Hubzylinders 10 auf den Auflagerzinken 4a, 4b des Bundhubwagens 4. Ähnlich wie die Bundablage-Elemente 3a, 3b sind die Auflagerzinken 4a, 4b ebenfalls asymmetrisch zur Lotrechten 5 und vertikal zueinander beabstandet so angeordnet, dass die dem Bandende 2b zugewandte Auflagerzinke 4a tiefer als die dem Bandende 2b abgewandte Auflagerzinke 4b angeordnet ist.

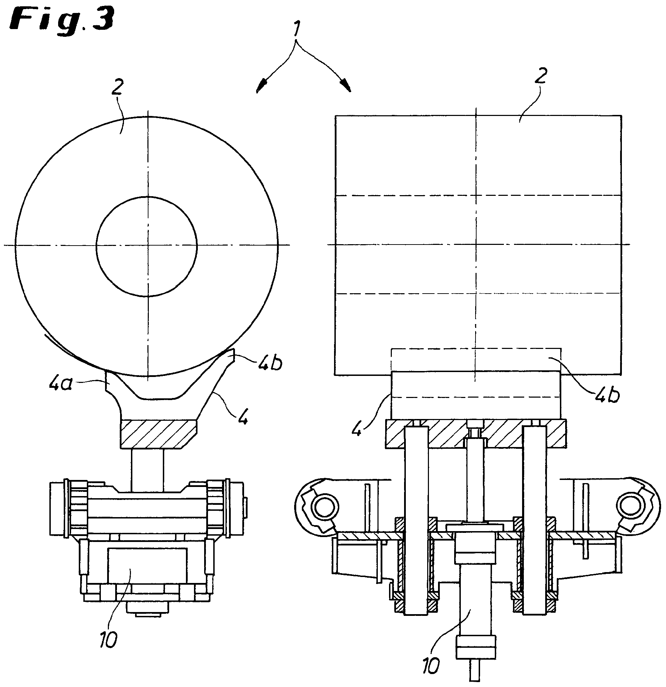

Figur 3 zeigt die Hubvorrichtung 4 aus der Vorrichtung 1 gemäß den Figuren 1 und 2 in einer Ansicht von der Seite und von hinten. Der Bundhubwagen 4 trägt nach Betätigung des Hubzylinders 10 den Bund 2, wobei in der Seitenansicht rechts in Figur 3 gezeigt ist, dass der Bundhubwagen 4 eine Längserstreckung aufweist, bei der die einzelnen Auflagerzinken 4a, 4b nicht die gesamte Breite des zu einem Bund 2 gewickelten Bandes abdecken. Die Hebevorrichtung 10 für den Bundhubwagen 4 besteht aus einem zentralen Arbeitszylinder sowie zwei seitlich zu dem Arbeitszylinder 10 angeordneten Führungszylindern, durch die ein Verkippen des Bundhubwagens 4 beim Umsetzen des Bundes 2 sicher unterbunden werden kann.

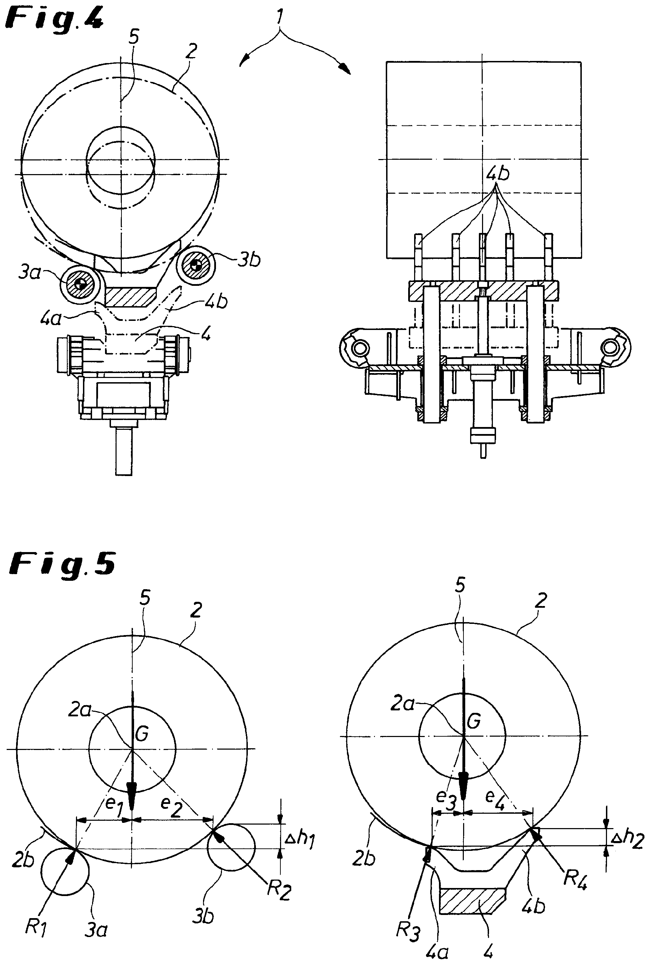

Figur 4 zeigt zwei Seitenansichten eines erfindungsgemässen Systems mit einer Vorrichtung 1 in einer alternativen Ausführungsform zu der in Figur 3 gezeigten Ausführungsform, die sich dadurch von der in Figur 3 dargestellten Form unterscheidet, dass die Breite der Auflagerzinken 4a, 4b größer als das Freimaß zwischen den beiden Bundablagen 3a, 3b ist. Die Auflagerzinken 4a, 4b des Bundhubwagens 4 sind daher kammartig ausgeführt, um eine Hubbewegung des Bundhubwagens 4 trotz des geringen Freimaßes zwischen den Bundablage-Elementen 3a, 3b dennoch zu gewährleisten. Bei der Übergabe des Bundes 2 von den Bundablage-Elementen 3a, 3b auf die Auflagerzinken 4a, 4b des Bundhubwagens 4 erfolgt somit keine seitliche Verschiebung der Lotrecht 5 des Bundes 2, wie links in Figur 4 dargestellt.
Figur 5 zeigt die auf die einzelnen Bundablage-Elemente 3a, 3b sowie auf die Auflagerzinken 4a, 4b einwirkenden Kräfte beim Ablegen des Bundes 2 auf den Bundablage-Elementen 3a, 3b bzw. Auflagerzinken 4a, 4b. Der Bund 2 liegt mit seiner Gewichtskraft G auf den Bundablage-Elementen 3a, 3b auf, wobei der Abstand zwischen der Lotrechten 5 durch das Rotationszentrum 2a des Bundes 2 zu der Lotrechten durch den Auflagerpunkt am Bundablage-Element 3a, das dem Bandende 2b zugewandt ist, mit e₁ und der Abstand zwischen der Lotrechten 5 und der Lotrechten durch den Auflagerpunkt des Bundes 2 am Bundablage-Element 3b mit e₂ bezeichnet ist. Der Höhenabstand zwischen den beiden Bundablage-Elementen 3a, 3b beträgt Δh₁. Aufgrund dieser asymmetrischen Gestaltung der Anordnung der Bundablage-Elemente 3a, 3b ist die auf das Bundablage-Element 3a einwirkende Gewichtskraft größer als die vom Bund 2 auf das dem Bandende 2b abgewandte Bundablage-Element 3b einwirkende Gewichtskraft. Somit ist die vom Bundablage-Element 3a aufzubringende Kraft R₁ größer als die vom Bundablage-Element 3b aufzubringende Kraft R₂. Bei der Ablage des Bundes 2 auf den Auflagerzinken 4a, 4b des Bundhubwagens 4 wird der Abstand zwischen der Lotrechten 5 durch das Rotationszentrum 2a des Bundes 2 und der Lotrechten durch den Auflagerpunkt an der dem Bandende 2b zugewandten Auflagerzinke 4a mit e₃ und der Abstand zwischen der Lotrechten 5 und der Lotrechten durch den Anlagepunkt an der dem Bandende 2b abgewandten Auflagerzinke 4b mit e₄ bezeichnet. Der vertikale Abstand zwischen den Anlagepunkten an den Auflagerzinken 4a, 4b wird mit Δh₂ bezeichnet. Aufgrund dieser asymmetrischen Anordnung der Auflagezinken 4a, 4b in Bezug auf die Lotrechte 5 ist die von der Auflagerzinke 4a aufzubringende Haltekraft R₃ größer als die von der Auflagerzinke 4b aufzubringende Haltekraft R₄. Dementsprechend kann bei gleichen Bundgewichten im Vergleich mit herkömmlichen Vorrichtungen zum Umsetzen von Bunden eine höhere Kraft auf das Bandende 2b aufgebracht werden.

## Patentansprüche

1. System mit einem Bund und einer Vorrichtung (1) in fördertechnischen Einrichtungen zum Umsetzen von zu Bunden (2) gewickelten Metallbändern, insbesondere hergestellt aus hochfesten oder ultrahochfesten Stahlsorten, wobei der Bund (2) zum Transport von einer ruhenden Position auf einer Bundablage (3) mittels einer höhenverstellbaren Bundhubvorrichtung (4) angehoben und abgesenkt werden kann, wobei die Bundablage (3) zwei zueinander seitlich beabstandet angeordnete Bundablage-Elemente (3a, 3b) und die Bundhubvorrichtung (4) zwei Auflagerzinken (4a, 4b) aufweist,
**dadurch gekennzeichnet, dass**
zumindest die Bundablage-Elemente (3a, 3b) so asymmetrisch zur Lotrechten (5) durch das Rotationszentrum (2a) des Bundes (2) angeordnet sind, dass die Auflagerpunkte für den Bund (2) an den Bundablage-Elementen (3a, 3b), vorzugsweise auch die Auflagerpunkte an den Auflagerzinken (4a, 4b), einen vertikalen Abstand (Δh₁, Δh₂) zueinander aufweisen.

2. System nach Anspruch 1, **dadurch gekennzeichnet, dass** sowohl die Bundablage-Elemente (3a, 3b) als auch die Auflagerzinken (4a, 4b) asymmetrisch zur Lotrechten (5) durch das Rotationszentrum (2a) des Bundes (2) angeordnet sind.

3. System nach einem der vorhergehenden Ansprüche, **dadurch gekennzeichnet, dass** die Auflagerzinken (4a, 4b) zueinander abgeschrägt verlaufende Kopfflächen aufweisen.

4. System nach einem der vorhergehenden Ansprüche, **dadurch gekennzeichnet, dass** das dem freien Bandende (2b) abgewandte Bundablage-Element (3b) um einen vertikalen Abstand (Δh₁) höher als das dem freien Bandende (2b) zugewandte Bundablage-Element (3a) in der Vorrichtung (1) angeordnet ist.

5. System nach einem der vorhergehenden Ansprüche, **dadurch gekennzeichnet, dass** die Auflagerzinken (4a, 4b) eine horizontale Erstreckung haben, die größer als das Freimaß zwischen den Bundablage-Elementen (3a, 3b) ist.

6. System nach einem der vorhergehenden Ansprüche, **dadurch gekennzeichnet, dass** die dem freien Bandende (2b) abgewandte Auflagerzinke (4b) um einen vertikalen Abstand (Δh₂) höher als das dem freien Bandende (2b) zugewandte Auflagerzinke (4a) in der Vorrichtung (1) angeordnet ist.

7. System nach einem der vorhergehenden Ansprüche, **dadurch gekennzeichnet, dass** der Quotient aus dem vertikalen Abstand (Δh₁) der Bundablage-Elemente (3a, 3b) zur Summe der Abstände (e₁, e₂) zwischen den Lotrechten durch die Auflagerpunkte für den Bund (2) an den Bundablage-Elementen (3a,3b) und der Lotrechten (5) durch das Rotationszentrum (2a) des Bundes (2) [e₁ + e₂] zwischen 0,1 und 0,5 beträgt.

8. System nach einem der vorhergehenden Ansprüche, **dadurch gekennzeichnet, dass** der Quotient aus dem vertikalen Abstand (Δh₂) der Auflagerzinken (4a, 4b) zur Summe der Abstände (e₃,e₄) zwischen den Lotrechten durch die Auflagerpunkte für den Bund (2) an den Auflagerzinken (4a, 4b) und der Lotrechten (5) durch das Rotationszentrum (2a) des Bundes (2) [e₃ + e₄] zwischen 0,1 und 0,5 beträgt.

9. System nach einem der vorhergehenden Ansprüche, **dadurch gekennzeichnet, dass** die auf das dem freien Bandende (2b) abgewandte Bundablage-Element (3b) einwirkende Gewichtskraft durch den Bund (2) größer als die auf das dem freien Bandende (2b) zugewandte Bundablage-Element (3a) einwirkende Gewichtskraft ist.

10. System nach einem der vorhergehenden Ansprüche, **dadurch gekennzeichnet, dass** die auf die dem Bandende (2a) abgewandte Auflagerzinke (4b) einwirkende Gewichtskraft durch den Bund (2) größer als die auf die dem freien Bandende (2b) zugewandte Auflagerzinke (4a) einwirkende Gewichtskraft ist.

## Claims

1. A system having a coil and a device (1) in conveying apparatuses for transferring metal strips wound to form coils (2), in particular produced from high-strength or ultra high-strength steel grades, it being possible for the coil (2) to be lifted and lowered for transport from a resting position on a coil repository (3) by means of a height-adjustable coil lifting device (4), the coil repository (3) having two coil repository elements (3a, 3b) arranged laterally spaced from one another and the coil lifting device (4) having two support tines (4a, 4b),
**characterized in that**
at least the coil repository elements (3a, 3b) are arranged asymmetrically to the vertical (5) through the rotational centre (2a) of the coil (2) in such a manner, that the support points for the coil (2) on the coil repository elements (3a, 3b), preferably also the support points on the support tines (4a, 4b), have a vertical spacing (Δh₁, Δh2) with respect to one another.

2. The system according to Claim 1, **characterized in that** both the coil repository elements (3a, 3b) and the support tines (4a, 4b) are arranged asymmetrically to the vertical (5) through the rotational centre (2a) of the coil (2).

3. The system according to one of the preceding claims, **characterized in that** the support tines (4a, 4b) have head surfaces running obliquely to one another.

4. The system according to one of the preceding claims, **characterized in that** the coil repository element (3b) facing away from the free strip end (2b) is arranged higher by a vertical distance (Δh₁) than the coil repository element (3a) facing the free strip end (2b) in the device (1).

5. The system according to one of the preceding claims, **characterized in that** the support tines (4a, 4b) have a horizontal extent, which is larger than the free space between the coil repository elements (3a, 3b).

6. The system according to one of the preceding claims, **characterized in that** the support tine (4b) facing away from the free strip end (2b) is arranged higher by a vertical distance (Δh₂) than the support tine (4a) facing the free strip end (2b) in the device (1).

7. The system according to one of the preceding claims, **characterized in that** the quotient of the vertical spacing (Δh₁) of the coil repository elements (3a, 3b) to the sum of the spacings (e₁, e₂) between the verticals through the support points for the coil (2) on the coil repository elements (3a, 3b) and the vertical (5) through the rotational centre (2a) of the coil (2) [e₁ + e₂] is between 0.1 and 0.5.

8. The system according to one of the preceding claims, **characterized in that** the quotient of the vertical spacing (Δh₂) of the support tines (4a, 4b) to the sum of the spacings (e₃, e₄) between the verticals through the support points for the coil (2) on the support tines (4a, 4b) and the vertical (5) through the rotational centre (2a) of the coil (2) [e₃ + e₄] is between 0.1 and 0.5.

9. The system according to one of the preceding claims, **characterized in that** the weight force through the coil (2) acting on the coil repository element (3b) facing away from the free strip end (2b) is greater than the weight force acting on the coil repository element (3a) facing the free strip end (2b).

10. The system according to one of the preceding claims, **characterized in that** the weight force through the coil (2) acting on the support tine (4b) facing away from the free strip end (2b) is greater than the weight force acting on the support tine (4a) facing the free strip end (2b).

## Revendications

1. Système avec une bobine et un dispositif (1) dans des installations de manutention pour déplacer des feuillards métalliques enroulés en bobines (2), notamment fabriqués à partir de nuances d'acier à haute résistance ou très haute résistance, la bobine (2) pouvant être levée et descendue pour le transport d'une position de repos sur un support de bobine (3) au moyen d'un dispositif élévateur pour bobines réglable en hauteur (4), le support de bobine (3) comportant deux éléments de support de bobine (3a,3b) disposés latéralement à distance l'un de l'autre et le dispositif élévateur pour bobines (4) deux étriers de support (4a,4b)
**caractérisé en ce qu'**
au moins les éléments de support de bobine (3a,3b) sont disposés de manière asymétrique à la perpendiculaire (5) passant par le centre de rotation (2a) de la bobine (2) de telle manière que les points d'appui pour la bobine (2) sur les éléments de support de bobine (3a,3b), de préférence également les points d'appui sur les étriers de support (4a,4b), présentent entre eux un intervalle vertical (Δh₁,Δh₂).

2. Système selon la revendication 1, **caractérisé en ce que** tant les éléments de support de bobine (3a,3b) que les étriers de supports (4a,4b) sont disposés de manière asymétrique à la perpendiculaire (5) passant par le centre de rotation (2a) de la bobine (2).

3. Système selon l'une quelconque des revendications précédentes, **caractérisé en ce que** les étriers de support (4a,4b) comportent des surfaces de tête inclinées l'une par rapport à l'autre.

4. Système selon l'une quelconque des revendications précédentes, **caractérisé en ce que** l'élément de support de bobine (3b) opposé à l'extrémité libre du feuillard (2b) est disposé dans le dispositif (1) plus haut d'une distance verticale (Δh₁) que l'élément de support de bobine (3a) tourné vers l'extrémité libre du feuillard (2b).

5. Système selon l'une quelconque des revendications précédentes, **caractérisé en ce que** les étriers de support (4a,4b) ont une extension horizontale qui est plus grande que la dimension libre entre les éléments de support de bobine (3a,3b).

6. Système selon l'une quelconque des revendications précédentes, **caractérisé en ce que** l'étrier de support (4b) opposé à l'extrémité libre du feuillard (2b) est disposé dans le dispositif (1) plus haut d'une distance verticale (Δh₂) que l'étrier de support (4a) tourné vers l'extrémité libre du feuillard (2b).

7. Système selon l'une quelconque des revendications précédentes, **caractérisé en ce que** le quotient de la distance verticale (Δh₁) entre les éléments de support de bobine (3a,3b) par rapport au total des distances (e₁,e₂) entre les perpendiculaires passant par les points d'appui pour la bobine (2) sur les éléments de support de bobine (3a,3b) et les perpendiculaires (5) passant par le centre de rotation (2a) de la bobine (2) [e₁+e₂] se situe entre 0,1 et 0,5.

8. Système selon l'une quelconque des revendications précédentes, **caractérisé en ce que** le quotient de la distance verticale (Δh₂) entre les étriers de support (4a, 4b) par rapport au total des distances (e₃,e₄) entre les perpendiculaires passant par les points d'appui pour la bobine (2) sur les étriers de support (4a,4b) et les perpendiculaires (5) passant par le centre de rotation (2a) de la bobine (2) [e₃+e₄] se situe entre 0,1 et 0,5.

9. Système selon l'une quelconque des revendications précédentes, **caractérisé en ce que** le poids exercé par la bobine (2) agissant sur l'élément de support de bobine (3b) opposé à l'extrémité libre de feuillard (2b) est plus important que le poids agissant sur l'élément de support de bobine (3a) tourné vers l'extrémité libre de feuillard (2b).

10. Système selon l'une quelconque des revendications précédentes, **caractérisé en ce que** le poids exercé par la bobine (2) agissant sur l'étrier de support (4b) opposé à l'extrémité libre de feuillard (2a) est plus important que le poids agissant sur l'étrier de support (4a) tourné vers l'extrémité libre de feuillard (2b).
